# EUROPEAN PATENT SPECIFICATION

(11) **EP 4 432 972 B1**
(45) Date of publication and mention of the grant of the patent: **20.05.2026**
(21) Application number: 22817909.9
(22) Date of filing: 14.11.2022
(51) Int. Cl.: A61C 17/34

(54) **POWER TOOTHBRUSH**
ELEKTRISCHE ZAHNBÜRSTE
BROSSE À DENTS ÉLECTRIQUE

(30) Priority: 20.11.2021 US 202163281647 P
(43) Date of publication of application: 25.09.2024
(73) Proprietor: Koninklijke Philips N.V., 5656 AE Eindhoven (NL)
(72) Inventor: DENGLER, Evan Dak Wah, 5656 AG Eindhoven (NL); LEE, Sungsoo, 5656 AG Eindhoven (NL); MILLER, Kevin Arnold, 5656 AG Eindhoven (NL)
(74) Representative: Philips Intellectual Property & Standards
(86) International application number: PCT/EP2022/081696
(87) International publication number: WO 2023/088809

(56) References cited:
- WO-A1-2020/048503
- US-A1- 2010 175 207
- US-A1- 2013 025 079
- US-A1- 2013 025 080
- US-B1- 6 363 565

## Description

### Field of the Disclosure

The present disclosure is directed generally to personal care devices and systems for generating controllable sweeping and power tapping motions to achieve high performance cleansing results.

### Background

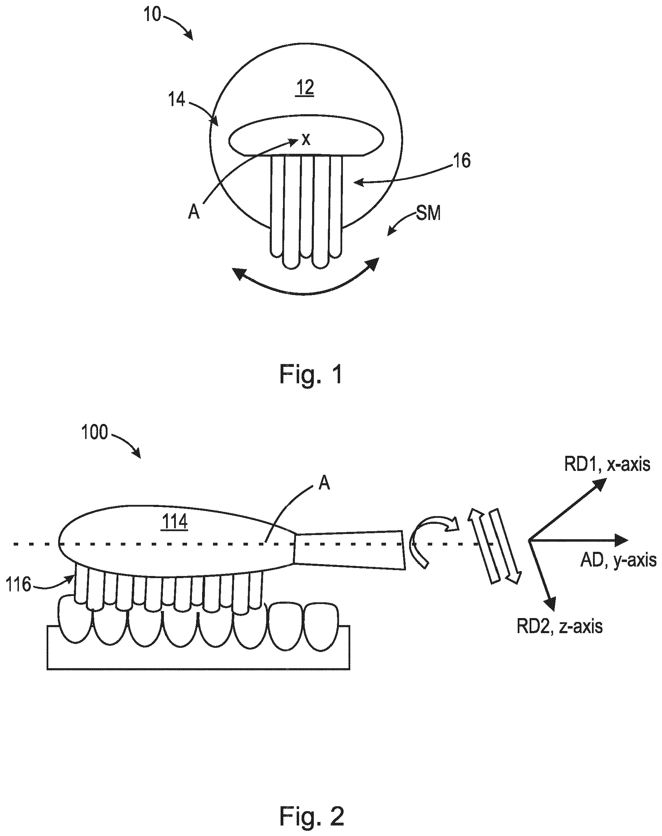

Current modern power toothbrush devices use rotary motion about a central axis of the brush head. This motion is known as a sweeping motion. A simplified schematic representation of a modern power toothbrush is shown in FIG. 1. As shown in FIG. 1, power toothbrush 10 has a handle 12 and a brush head 14. Bristles 16 are shown extending from brush head 14. In use, brush head 14 is driven by a drive system contained within handle 12. The bristles are typically rotated by the drive system about central axis A in a sweeping motion SM. The sweeping motion is typically embodied as movement that is linear, rotational, or a combination of both linear and rotational and the movement is tangential to the direction that the bristles are facing.

Unfortunately, toothbrush devices that employ the sweeping motion alone are not optimized for all target areas in the mouth (e.g., interproximal areas, gumline areas, incisor surfaces, molar surfaces, and overall surface areas of the teeth). Achieving proper cleaning performance at all target areas depends on a number of factors, including toothbrush layout, motion of the toothbrush, and user handling. Although manufacturers can control toothbrush layout or design, it is challenging to design a toothbrush that performs optimally at all target areas due to conflicting requirements for the different areas. Consequently, toothbrushes can have non-optimal performance at certain areas of interest. Although consumers could ideally use different types of toothbrushes to achieve the best cleaning in all the target areas, consumers only employ a single toothbrush device for daily oral care routines.

Thus, there is a need in the art for improved power toothbrush devices and systems that achieve stain and/or plaque removal and gum health objectives. There is also a need in the art for improved power toothbrush devices and systems that optimize different drivetrain motions to target specific areas of the mouth.

US 2013/025080 A1 describes a linear electro-polymer motor including a fixed member, a linear shaft having an axis, a polymer actuator, and a bias member.

WO 2020/048503 A1 describes a linear actuator applicable to an oral cleaning device, and an oral cleaning device using the linear actuator. The linear actuator comprises a stator.

US 2010/175207 A1 describes an electric toothbrush, specifically the toothbrush handle of an electric toothbrush, with a handle housing, with a preferably rod-shaped drive transmitter.

US 2013/025079 A1 describes an oscillatory system for a motorized drive unit for the generation of a rotary oscillatory movement. The system includes a first oscillatory component.

US6363565 B1 describes a linear electro-polymer motor including a fixed member, a linear shaft having an axis, a polymer actuator, and a bias member.

### Summary of the Disclosure

The invention is as defined in the appended claims.

The present disclosure is directed generally to inventive electric or powered personal care devices, such as, an electric toothbrush or shaver, and methods for producing high performance cleansing results using the electric or powered personal care devices. The inventive systems achieve improved stain and/or plaque removal and gum health objectives by precisely and controllably generating a power tapping motion in combination with a sweeping motion. Various embodiments and implementations herein are directed to improved systems having a brush head member having a set of bristles and one of a variety of drivetrain assemblies. The improved drivetrain assemblies generate periodic linear movement in addition to the periodic rotational movement, and include a drivetrain shaft to transmit such linear and rotational movements to the brush head member such that the set of bristles move in a sweeping motion and a tapping motion. Applicant has recognized and appreciated that electric or powered personal care devices can be significantly improved upon by controllably driving the bristles in a direction that is parallel to the z-axis of the device (i.e., in a tapping motion), where the movement is within a particular range of critical amplitudes and frequencies. Applicant has further recognized and appreciated that such controlled tapping motion can be used in combination with a controllable sweeping motion to achieve improved stain and/or plaque removal and gum health objectives. Particular sweeping and tapping motions can be combined to generate particularly useful summations of strokes and pulsations as described herein.

**In** a first aspect, there is provided a power toothbrush device according to claim 1.

According to an embodiment, the set of bristles are configured to move at an amplitude greater than 0.5 mm and less than 3 mm in the first direction.

According to an embodiment, the set of bristles are configured to move at a frequency less than 520 Hz in the first direction.

According to an embodiment, the drivetrain shaft is further configured to periodically rotate the set of bristles in a second direction, different than the first direction, wherein the second direction is about the central axis of the power toothbrush device.

According to an embodiment, the set of bristles are configured to move in the first direction at a first frequency and the set of bristles are configured to move in the second direction at a second frequency that is the same as the first frequency.

According to an embodiment, the drivetrain shaft is further configured to operate the periodic linear movement in phase with the rotational movement.

According to an embodiment, the actuator of the drivetrain assembly comprises a magnet and conductors to generate the periodic linear movement.

According to an embodiment, the actuator of the drivetrain assembly comprises a magnet and conductors to generate the periodic rotational movement.

According to an embodiment, the set of bristles are configured to move at an amplitude equal to or greater than 0.50 mm and a frequency equal to or greater than 40 Hz in the second direction.

According to an embodiment, the set of bristles are configured to move at an amplitude greater than 0.5 mm and less than 6 mm in the second direction.

According to an embodiment, the set of bristles are configured to move at a frequency less than 500 Hz in the second direction.

According to an embodiment, the drivetrain assembly further comprises a resilient member and a pivot point within the resilient member, wherein the pivot point is configured to reverse the generated periodic linear movement.

According to an embodiment, the drivetrain shaft is configured to be displaced along the z-axis of the power toothbrush device to generate the periodic linear movement.

According to an embodiment, the actuator is configured to generate the periodic rotation in the second direction.

According to an embodiment, the drivetrain assembly further comprises a resilient member and a pivot point within the resilient member, wherein the pivot point is configured to reverse the generated periodic rotational movement.

In various implementations, a processor or controller may be associated with one or more storage media (generically referred to herein as "memory," e.g., volatile, and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a simplified schematic representation of an end view of a modern power toothbrush device configured to employ a sweeping motion.
FIG. 2 is a simplified schematic representation of a portion of a power toothbrush device, according to aspects of the present disclosure.
FIG. 3 is a simplified schematic representation of an end view of a power toothbrush device configured to employ sweeping and tapping motions, according to aspects of the present disclosure.
FIG. 4 is a tabular representation of critical sweeping and tapping parameters, according to aspects of the present disclosure.
FIG. 5 is a diagrammatic representation of critical parameters of frequency and amplitude for a power toothbrush device using a periodic pulsing (i.e., tapping) motion, according to aspects of the present disclosure.
FIG. 6A is a simplified schematic representation of an end view of a power toothbrush device configured to employ sweeping and tapping motions, according to aspects of the present disclosure.
FIG. 6B is a simplified schematic representation of an end view of a power toothbrush device configured to employ sweeping and tapping motions, according to aspects of the present disclosure.
FIG. 6C is a simplified schematic representation of an end view of a power toothbrush device configured to employ sweeping and tapping motions, according to aspects of the present disclosure.
FIG. 7 is a schematic representation of a power toothbrush device, according to aspects of the present disclosure.
FIG. 8 is a schematic representation of a portion of a drivetrain assembly of a power toothbrush device, according to aspects of the present disclosure.
FIG. 9 is a schematic representation of the magnet and conductors of the portion of the drivetrain assembly shown in FIG. 8, according to aspects of the present disclosure.
FIG. 10 is a flowchart illustrating a method of operating a personal care device such as a power toothbrush device, according to aspects of the present disclosure.

### Detailed Description of Embodiments

The present disclosure describes various embodiments of improved systems and methods for driving brush heads of electric or powered personal care devices, such as, electric toothbrushes or shavers and the like. Applicant has recognized and appreciated that personal care devices can provide improved cleansing performance at critical areas by driving the bristles of the device in a sweeping motion in combination with a controllable vertical periodic motion that is parallel to the direction of the bristles, where the amplitude of the vertical motion is equal to or greater than 0.25 mm (referred to herein as "power tapping"). As used herein, the term "vertical" does not mean an absolute direction with respect to the ground, but instead is used to indicate a relative direction of movement illustrated in the Figures. As described herein, the inventive power tapping motion within power toothbrush devices: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to variables of use like toothbrush placement, toothbrush angle, and toothbrush pressure, and (v) provides new options for experiential modes for the consumer. Accordingly, exemplary improved systems and methods described or otherwise envisioned herein provide a brush head member having a set of bristles and one of a variety of drivetrain assemblies to generate periodic rotational movement and periodic linear movement. The periodic linear movement is transmitted by a drivetrain shaft to move the bristles in a direction that is parallel to the z-axis of the device. Applicant has recognized and appreciated that such controlled linear movement can be combined with rotational movement to provide improved cleaning performance.

A particular goal of utilization of the embodiments and implementations herein is to provide a mechanism to provide a power tapping motion in a power toothbrush device like, e.g., a Philips Sonicare^{™} electric toothbrush (manufactured by Koninklijke Philips N.V.). However, the components of the device may be utilized with many other personal care devices, including oral care devices, oral cleaning devices, flossers, skin cleaners, and many other devices. This disclosure should not be limited by the specific embodiments depicted and described.

As shown in FIG. 2, a simplified schematic representation of a portion of power toothbrush device 100 configured to generate a sweeping motion and a tapping motion is provided. Power toothbrush device 100 comprises brush head 114 which can be driven to rotate bristles 116 about central axis A. The directions shown in FIG. 2 are included to demonstrate the spatial terminology used in the art and the present application. As used herein, the term "vertical" means the direction indicated. Axial direction AD is parallel to central axis A and extends along a y-axis of the device 100. Radial direction RD1 is orthogonal to central axis A and radial direction RD2 and extends along an x-axis of the device 100. Radial direction RD2 is orthogonal to both axial direction AD and radial direction RD1, parallel to the axes of the bristles 116 depicted, and extends along a z-axis of the device 100. The power tapping motion described herein refers to controllable movement of the brush head and bristles in radial direction RD2. In other words, the power tapping motion refers to motion of the bristles that is parallel to an axis of alignment of the bristles. The sweeping motion refers to rotary and/or linear motion of the bristles that is perpendicular to the axis of alignment of the bristles. In embodiments, the power tapping motion refers to controllable movement of the brush head and/or bristles in radial direction RD2 by rotating the drivetrain shaft about an axis extending in radial direction RD1 (i.e., about an x-axis of the device).

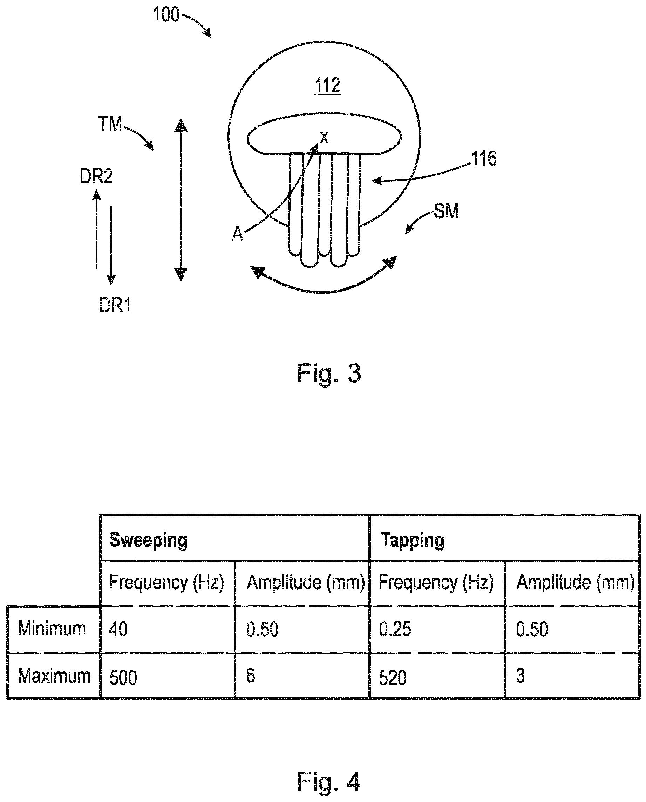

Referring to FIG. 3, a schematic representation of an end view of power toothbrush device 100 is provided. Device 100 is configured to generate a variety of motions, each motion comprising a summation (i.e., a cumulative act, motion, or effect) of sweeps or strokes and pulses or taps. The sweeps or strokes are directed in direction SM, (which would be in a direction between occlusal surfaces, i.e., biting surfaces, and the gumline when the toothbrush is held with the bristle tips pointing toward a buccal side of the teeth). The pulses or taps are directed in the vertical direction TM (which would be a lingual to facial direction when the toothbrush is held with the bristle tips pointing toward a buccal side of the teeth). As used herein, the tapping motion is defined as vertical periodic movement (i.e., direction TM) that is equal to or greater than 0.25 mm in amplitude. As discussed in greater detail herein, the power toothbrush device 100 can be configured to use the sweeping and tapping motions (SM and TM) for optimizing motion to a specific region that a particular motion is most beneficial for. For example, in embodiments, a small power tapping motion (i.e., a tapping motion with an amplitude on the smaller side of the critical range) can be used with the sweeping motion for the buccal anterior region of the mouth. In other embodiments, a large power tapping motion (i.e., a tapping motion with higher amplitudes) can be used with the sweeping motion to achieve better reach at interproximal regions in-between teeth.

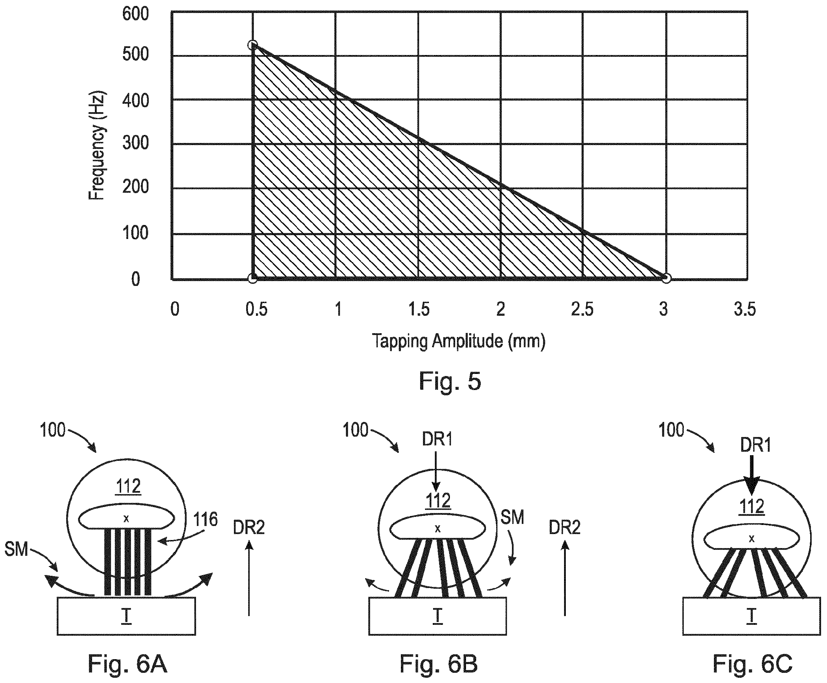

FIG. 4 shows a tabular representation of critical sweeping and tapping parameters described herein. FIG. 5 shows a graphical "Golden Triangle" that represents the optimal operating region for the power tapping parameters when used with a personal care device such as a power toothbrush device. When the optimal operating tapping parameters are combined with the optimal sweeping parameters, the "Golden Triangle" becomes a "Golden Pyramid." The abscissa of FIG. 5 shows the tapping amplitudes, while the ordinate shows the frequencies of the movement. The term frequency refers to a number of cycles for a given time interval, e.g., a second. The term amplitude refers to a peak amplitude which can comprise a maximum absolute value of a signal. While the desired range of amplitudes for the power tapping motion is from around ±0.25 mm to around ±3 mm, the power tapping motion generally comprises a periodic vertical motion equal to or greater than ±0.5 mm.

Amplitudes that are higher than ±3 mm are not desired due to a risk of tooth chatter, where the platen of the toothbrush device can impact the occlusal surfaces of the opposing jaw. Additionally, amplitudes that are higher than ±3 mm can cause undesired vibration of oral and nasal tissues, as well as an unpleasant sensation on the treated surfaces. Frequencies that are lower than 0.25 Hz would be too slow to be efficacious. Frequencies that are higher than 520 Hz would be over double the primary resonant frequency and are not desirable.

It should be appreciated that a recommended oral care routine lasts for 2 minutes and, when considering an average of 32 teeth, there is approximately 3.75 seconds per tooth available during the recommended oral care routine. Thus, if the incidence of the power tapping motion is slower than 4 seconds, then it is too slow to be applied uniformly throughout the mouth (i.e., at every interproximal spot). Accordingly, in preferred embodiments, the incidence of the power tapping motion occurs at least every 3.75 seconds (i.e., a frequency of approximately 0.27 Hz). In embodiments, the minimal frequency may be approximately 2 Hz (i.e., at least every 0.5 seconds). In further embodiments, in order for a user to experience the power tapping motion uniformly throughout the mouth (i.e., at every interproximal spot and/or at each tooth), the power tapping motion can occur multiple times during each pass over a single tooth. Thus, the requisite frequency would be approximately 20 Hz (i.e., at least every 0.05 seconds). Of course, if an oral care routine is shorter than or longer than 2 minutes, it should be appreciated that the incidence of the power tapping motion may be adjusted accordingly so that the incidence of the power tapping motion occurs uniformly throughout the oral care routine. In other embodiments, it should be appreciated that it may be desired to have the incidence of the power tapping motion occur inconsistently or nonuniformly due to an analysis of particular areas where the tapping motion is more beneficial than other areas, for example.

In example embodiments, the sweeping motion is combined with the tapping motion having an amplitude of 0.25 mm and, the addition of the tapping motion can generate a 1% improvement in the gumline areas, a 3% improvement in the interdental areas, and a 1% overall improvement in cleaning performance considering coverage of all surfaces to be cleaned.

The tapping motion improves the performance of the sweeping motion, in part, by untrapping or unpinning the bristle tufts. Bristle trapping or pinning is a phenomena where, under heavy loads, the bristles can become constrained or trapped such that they no longer freely move according to the sweeping motion delivered by the drivetrain. When the user applies too much load when brushing, the bristle tufts can become partially constrained in their movement on the surface of the teeth. As a result of the constraint, the sweeping motion is reduced and the cleaning performance can suffer. When the user applies even more load, the bristle tufts can become trapped or pinned where the tufts do not move at all when brushing. As a result of the trapped or pinned bristles, there is no sweeping motion and the user derives no benefit from the sweeping motion from the drivetrain assembly. When bristles are constrained or trapped, the cleaning benefits only resume when the user manually moves the product to a new orientation and frees the bristles from the heavy loads.

The sweeping motion performs best when the bristles touch the surface of the tooth and can move freely along large surface areas without being constrained. As shown in FIG. 6A, the bristles 116 are allowed to freely move in the sweeping motion SM when no load is applied and the bristles are not splayed. FIG. 6B shows the effect on bristles 116 when load is applied and the bristles are splayed against one or more surfaces of teeth T. Although the bristles can still move in the sweeping motion SM in FIG. 6B, the bristles are constrained and thus, the sweeping motion is reduced. As shown in FIG. 6C, when too much load is applied to the bristles 116, the bristles can become trapped against the surfaces of the teeth T and the sweeping motion is prevented.

The sequence of bristle positions and movements relative to the surfaces of the teeth, as shown in FIGS. 6A, 6B, and 6C, can also be useful when discussing how the tapping motion can improve the performance of the sweeping motion. For example, when brushing with sweeping and tapping motions together, the bristle tufts splay out as the load increases or as the brush head moves in direction DR1 due to the drivetrain assembly generating the vertical up-down movement (i.e., the power tapping motion). As the load increases due to the force exerted from the drivetrain assembly or otherwise due to user applied load for example, the tufts become more and more constrained as shown in FIG. 6C. However, if the amplitude of the brush head movement in direction DR1 is large enough, the large amplitude movement can cause buckling of a constrained or trapped bristle and effectively release or unload the bristle. Thus, the addition of the tapping motion of a sufficiently large amplitude to the sweeping motion allows the bristles to move with more freedom, thereby improving cleaning performance. Critically, when the brush head moves in direction DR2 during the periodic tapping motion, the behavior reverses and the sequence proceeds from the positions shown in FIG. 6C and/or FIG. 6B to the position shown in FIG. 6A. As the load decreases, the tufts become less and less constrained. The tapping motion can allow the tufts to cover a larger surface area during the sweeping motion and improve plaque removal by restoring the beneficial sweeping motion.

The addition of the tapping motion to the sweeping motion also achieves a deeper reach into gum pockets to remove subgingival plaque. Within gum pockets, the addition of the tapping motion achieves improved cleaning performance on marginal areas, interproximal areas, mesial areas, and buccal areas, and an improved overall cleaning performance. In example embodiments, the deeper reach and improved cleaning performance is achieved under a 30 degree roll angle, a 45 degree roll angle, or a 60 degree roll angle, or any suitable roll angle. Thus, the addition of the tapping motion renders the cleaning efficiency of the brush to be more robust to user orientation, and less dependent on the user's technique, than using the sweeping motion alone.

The improved cleaning performance can be achieved by using the critical operating parameters for the tapping motion discussed herein. While a variety of drivetrain assemblies can be implemented to generate the tapping motion, we will discuss an exemplary assembly below merely to illustrate how the invention can be implemented and practiced.

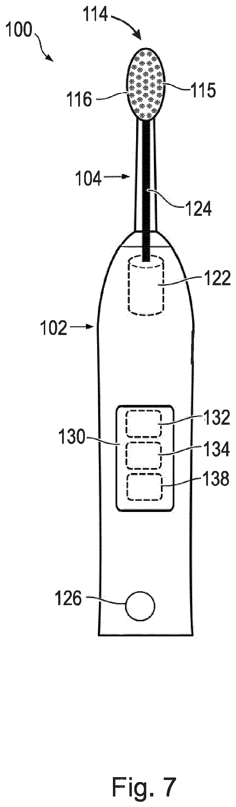

Referring to FIG. 7, an example power toothbrush device 100 including a body portion 102 with a housing and a brush head member 104 mounted on the body portion 102 is provided. Brush head member 104 includes at its end remote from the body portion 102 brush head 114. Brush head 114 includes bristle face 115, which provides a plurality of bristles 116. According to an embodiment, the bristles extend along an axis substantially perpendicular to the head's axis of elongation, although many other embodiments of the brush head and bristles are possible.

Head member 104, brush head 114, and/or bristle face 115 are mounted so as to be able to move relative to the body portion housing 102. The movement can be any of a variety of different movements, including vibrations or rotation, among others. According to one embodiment, head member 104 is mounted to the body portion housing 102 so as to be able to vibrate relative to body portion housing 102, or, as another example, brush head 114 is mounted to head member 104 so as to be able to vibrate relative to body portion housing 102, or, as another example, bristle face 115 is mounted to head member 103 so as to be able to vibrate relative to body portion housing 102. The head member 104 can be fixedly mounted onto body portion housing 102, or it may alternatively be detachably mounted so that head member 104 can be replaced with a new one when the bristles or another component of the device are worn out and require replacement.

The body portion includes a drivetrain assembly 122 with an actuator or motor for generating movement and a transmission component 124, or shaft, for transmitting the generated movements to brush head member 104. For example, drivetrain assembly 122 comprises a motor or electromagnet(s) that generates movement of drivetrain shaft 124, which is subsequently transmitted to the brush head member 104. Drivetrain and motor 122 can include components such as a power supply, an oscillator, and one or more electromagnets, among other components. In this embodiment the power supply comprises one or more rechargeable batteries, not shown, which can, for example, be electrically charged in a charging holder in which power toothbrush device 100 is placed when not in use.

The body portion is further provided with a user input 126 to activate and de-activate movement generator or drivetrain assembly 122. The user input 126 allows a user to operate the toothbrush 100, for example, to turn the toothbrush 100 on and off. The user input 126 may, for example, be a button, touch screen, or switch.

The body portion of the device also comprises a controller 130. Controller 130 may be formed of one or multiple modules, and is configured to operate the power toothbrush device 100 in response to an input, such as input obtained via user input 126 or an input from a sensor within the device. Controller 130 can comprise, for example, a processor 132 and a memory 134, and can optionally include a connectivity module 138. The processor 132 may take any suitable form, including but not limited to a microcontroller, multiple microcontrollers, circuitry, a single processor, or plural processors. The memory 134 can take any suitable form, including a non-volatile memory and/or RAM. The non-volatile memory may include read only memory (ROM), a hard disk drive (HDD), or a solid state drive (SSD). The memory can store, among other things, an operating system. The RAM is used by the processor for the temporary storage of data. According to an embodiment, an operating system may contain code which, when executed by controller 130, controls operation of the hardware components of power toothbrush device 100. According to an embodiment, connectivity module 138 transmits collected sensor data, and can be any module, device, or means capable of transmitting a wired or wireless signal, including but not limited to a Wi-Fi, Bluetooth, near field communication, and/or cellular module.

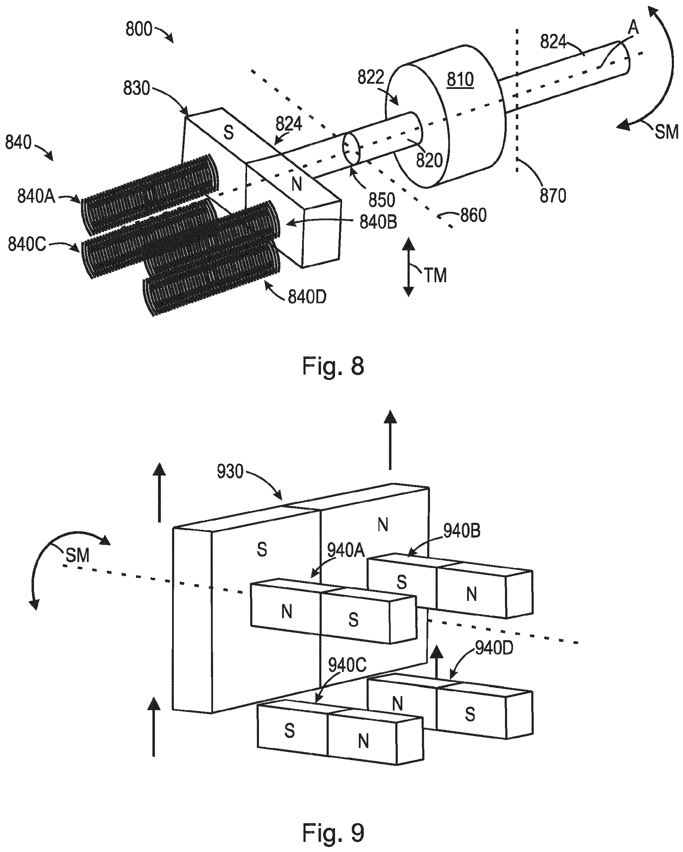

Referring to FIG. 8, in one embodiment, a schematic drivetrain assembly 800 of a power toothbrush is provided for generating the periodic linear movement (i.e., the tapping motion) by itself or in combination with a periodic rotational movement (i.e., the sweeping motion). The drivetrain assembly 800 broadly comprises resonator or load mass 810, resilient member 820, magnet 830, and conductors or electromagnetic assembly 840. The load mass or resonator 810, which can be brush head member 104 or connected to brush head member 104, can be connected to a drivetrain shaft 824 (e.g., shaft 124) to transmit vibrations to a brush head member (e.g., member 104). Resonator 810 is also connected to end 822 of resilient member 820, which can be any suitable spring, such as, a tension spring, a torsion spring, a compression spring, a leaf spring, a V-shaped spring, a U-shaped spring, or any of a variety of different spring shapes, types, and sizes. Magnet 830 is mounted on end 824 of resilient member 820, and an actuator comprising a plurality of conductors 840 are arranged to interact with magnet 830. End 824 of magnet 830 is opposite end 822. The plurality of conductors 840 are connected to a power source and a circuit board (not shown) for controlling the electromagnetic fields generated by the conductors. Magnet 830 can be any suitable permanent magnet, such as, neodymium and silicon magnets. Conductors 840 can be any suitable conductor made of any suitable non-magnetic material such as copper, aluminum, etc., or any combination thereof. Although FIG. 8 shows conductors 840 as coils, it should be appreciated that any suitable geometry or substitute component is contemplated.

Resonator 810 is configured to rotate about central axis A to periodically move a brush head member and its bristles in a sweeping motion SM. To generate the rotational sweeping motion SM, first and second conductors 840A and 840B are configured to generate electromagnetic fields to interact with the north and south poles of magnet 830. In other words, the drivetrain assembly 800 can generate switching currents in the conductive coils which alternate the directions of the electromagnetic fields and cause magnet 830 to rotate about axis A in sweeping motion SM. With reference to FIG. 9, magnet 930 represents magnet 830 and conductors 940A and 940B represent conductors 840A and 840B. Due to the orientation of the north and south poles of magnet 930, the polarities of conductors 940A and 940B can be alternated to push and pull magnet 930 about central axis A in sweeping motion SM. Reversing the polarities of conductors 940A and 940B in FIG. 9 forces the magnet 930 about central axis A and switching back the polarities of conductors 940A and 940B to the orientation shown in FIG. 9 would pull the magnet 930 back to the default orientation. Pivot point 850 in FIG. 8 reverses the sweeping movement thereby allowing balancing of the movement or reaction forces by utilizing the eigenfrequency, or natural frequency. As magnet 830, 930 rotates, so do resilient member 820 and resonator 810 and thus, the connected brush head member and bristles also rotate about central axis A in sweeping motion SM.

Third and fourth conductors 840C and 840D are also configured to generate electromagnetic fields to interact with the north and south poles of magnet 830 to cause magnet 830 to move in a vertical up-down motion (i.e., a tapping motion TM). It should be appreciated that conductors 840C and 840D can be used to move magnet 830 in the tapping motion TM while first and second conductors 840A and 840B are moving the magnet 830 in the sweeping motion SM. Alternatively, conductors 840C and 840D can be used to move magnet 830 in the tapping motion while conductors 840A and 840B are not moving the magnet in the sweeping motion. Conductors 940C and 940D in FIG. 9 represent conductors 840C and 840D. The configuration of conductors 940C and 940D shown in FIG. 9 is able to force magnet 930 in the upward vertical direction shown. While conductors 940A and 940B are arranged substantially around the middle or central points of the south and north poles of magnet 930, respectively, conductors 940C and 940D are arranged proximate to or below the bottom sides of the south and north poles of magnet 930, respectively. Pivot point 850 in FIG. 8 also reverses the movement in the upward vertical direction thereby allowing balancing of the movement or reaction forces by utilizing the eigenfrequency, or natural frequency. Additionally, the reversal of the polarities of conductors 940C and 940D from the configuration shown in FIG. 9 attracts magnet 930 in the downward vertical direction.

In embodiments, the sweeping motion SM and tapping motion TM can occur simultaneously. Alternatively, conductors 840C and 840D can be used alone to generate the tapping motion and the polarities of conductors 840A and 840B can remain constant in the orientation shown in FIG. 9 so that no sweeping motion is generated while the tapping motion is generated.

Pivot point 850 is located along axis A within resilient member 820 in the embodiment depicted. Pivot point 850 is depicted as an imaginary point within resilient member 820 that reverses the sweeping motion SM and/or the tapping motion TM. Pivot point 850 allows for the balancing of the movement or reaction forces by utilizing the natural frequency or eigenfrequency of drivetrain assembly 800. It should be appreciated that although pivot point 850 is an imaginary point in FIGS. 8 and 9, in alternate embodiments, pivot point 850 can be embodied as a structural pivot that reverses the sweeping and/or tapping movement. Additionally, it should be appreciated that pivot point 850 can be arranged at different points along axis A in different embodiments.

The configuration of drivetrain assembly 800 allows freedom of rotary motion for the brush head and bristles about the x and y axes of the power toothbrush device, while limiting rotation about the z-axis and translation in the y-axial direction. Freedom of rotation about the x-axis refers to rotation about axis 860. Freedom of rotation about the y-axis refers to rotation about the central axis A. The z-axis refers to axis 870 or an axis extending in radial direction RD2. Axis 860 is perpendicular to central axis A and passes through pivot point 850 in FIG. 8 however, axis 860 can be arranged along different points of axis A.

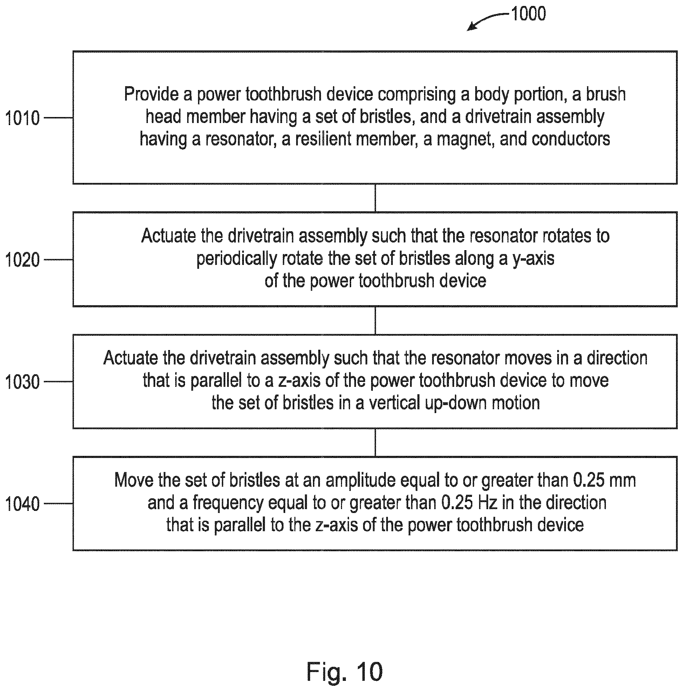

FIG. 10 depicts a flowchart illustrating a method of operating a power toothbrush device according to an exemplary embodiment where the device controllably produces the sweeping and tapping motions SM and TM to optimize cleaning performance for the target areas of the mouth.

The method begins at step 1010, where a power toothbrush device is provided. The power toothbrush device includes a body portion, a brush head member, a controller, and a drivetrain assembly as described or otherwise contemplated herein. The brush head member comprises a set of bristles extending from the brush head in a bristle direction. The drivetrain assembly comprises a drivetrain shaft configured to transmit vibrations to the brush head member. In embodiments, the drivetrain assembly further comprises a resonator (e.g., resonator 810), a resilient member (e.g., member 820), a magnet (e.g., magnet 830), and a plurality of conductors (e.g., conductors 840).

At step 1020, the drivetrain assembly is actuated such that the resonator rotates about a central axis of the power toothbrush device (e.g., axis A) to periodically rotate the set of bristles about the y-axis of the power toothbrush device. This movement pattern constitutes a sweeping motion (e.g., sweeping motion SM). As described above, electromagnetic fields can be generated with conductors 840A and 840B, 940A and 940B to rotate magnet 830, 930 about central axis A.

At step 1030, the drivetrain assembly is actuated such that the resonator is moved or displaced in a direction that is parallel to the z-axis of the power toothbrush device (e.g., axis 870) to periodically move the set of bristles in a vertical up-down motion (i.e., a tapping motion TM). As described above, electromagnetic fields can be generated with conductors 840C and 840D, 940C and 940D to move magnet 830, 930 in a vertical tapping movement direction TM. It should be appreciated that the drivetrain assembly can be actuated simultaneously to provide the sweeping and tapping motions by the controller. Alternatively, the drivetrain assembly can be first actuated to provide either of the sweeping or tapping motions and then subsequently actuated to provide the other of the sweeping or tapping motions by the controller. The bristles can be moved in the tapping motion at a first frequency and in the sweeping motion at a second frequency that is the same as the first frequency. Additionally, the tapping motion is in phase with the sweeping motion.

At step 1040, in generating the tapping motion, the set of bristles are moved at an amplitude equal to or greater than 0.25 mm and a frequency equal to or greater than 0.25 Hz in the direction that is parallel to the z-axis of the power toothbrush device. In embodiments, the tapping motion is implemented as a wave function. In other embodiments, the tapping motion is implemented as a pulse function. When implemented as a wave function, there is a consistent functional and perceptual window. The tapping motion occurs as a sine wave over time. The user position, angle, and load would be the main variables to control in such embodiments. When the tapping motion is implemented as a pulse function, there is a transient functional and perceptual window. The pulse function is preferred for precise active user control. The pulses can also be applied periodically, but likely create higher peak forces and thus, can be more perceptually noticeable than the wave functions.

The operational effect of the power toothbrush devices described herein is that they can provide improved cleansing performance at critical areas of the mouth by driving the bristles of the toothbrush in a vertical periodic motion that is parallel to the direction of the bristles (i.e., power tapping), where the size of the vertical motion is equal to or greater than 0.25 mm. The inventive power tapping motion within power toothbrush devices: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to use variables like toothbrush placement, toothbrush angle, and toothbrush pressure, and (v) provides new options for experiential modes for the consumer.

All definitions, as defined and used herein, should be understood to control over dictionary definitions and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the appended claims. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims, inventive embodiments may be practiced otherwise than as specifically described.

## Claims

1. A power toothbrush device (100), comprising:
a brush head member (104) having a set of bristles (116) at a distal end thereof;
a body portion (102) coupled with the brush head member; and
a drivetrain assembly (122) arranged within the body portion, the drivetrain assembly comprising:
an actuator (840) configured to generate periodic linear movement; and
a drivetrain shaft (124, 824) configured to transmit the generated periodic linear movement to the brush head member, such that the set of bristles move in a first direction (RD2) that is parallel to a z-axis of the power toothbrush device, wherein the z-axis is perpendicular to a central axis of the power toothbrush device and parallel to the axes of the set of bristles;
wherein the set of bristles are configured to move at an amplitude equal to or greater than 0.25 mm and a frequency equal to or greater than 0.25 Hz in the first direction.

2. The power toothbrush device of claim 1, wherein the set of bristles are configured to move at an amplitude greater than 0.5 mm and less than 3 mm in the first direction.

3. The power toothbrush device of claim 1, wherein the set of bristles are configured to move at a frequency less than 520 Hz in the first direction.

4. The power toothbrush device of claim 1, wherein the drivetrain shaft is further configured to periodically rotate the set of bristles in a second direction (SM), different than the first direction, wherein the second direction is about the central axis of the power toothbrush device.

5. The power toothbrush device of claim 4, wherein the set of bristles are configured to move in the first direction at a first frequency and the set of bristles are configured to move in the second direction at a second frequency that is the same as the first frequency.

6. The power toothbrush device of claim 4, wherein the drivetrain shaft is further configured to operate the periodic linear movement in phase with the rotational movement.

7. The power toothbrush device of claim 1, wherein the actuator of the drivetrain assembly comprises a magnet (830) and conductors (840C and 840D) to generate the periodic linear movement.

8. The power toothbrush device of claim 4, wherein the actuator of the drivetrain assembly comprises a magnet (830) and conductors (840A and 840B) to generate the periodic rotational movement.

9. The power toothbrush device of claim 4, wherein the set of bristles are configured to move at an amplitude equal to or greater than 0.50 mm and a frequency equal to or greater than 40 Hz in the second direction.

10. The power toothbrush device of claim 4, wherein the set of bristles are configured to move at an amplitude greater than 0.5 mm and less than 6 mm in the second direction.

11. The power toothbrush device of claim 4, wherein the set of bristles are configured to move at a frequency less than 500 Hz in the second direction.

12. The power toothbrush device of claim 1, wherein the drivetrain assembly further comprises a resilient member (820) and a pivot point (850) within the resilient member, wherein the pivot point is configured to reverse the generated periodic linear movement.

13. The power toothbrush device of claim 1, wherein the drivetrain shaft is configured to be displaced along the z-axis of the power toothbrush device to generate the periodic linear movement.

14. The power toothbrush device of claim 4, wherein the actuator is configured to generate the periodic rotation in the second direction.

15. The power toothbrush device of claim 8, wherein the drivetrain assembly further comprises a resilient member (820) and a pivot point (850) within the resilient member, wherein the pivot point is configured to reverse the generated periodic rotational movement.

## Patentansprüche

1. Elektrische Zahnbürstenvorrichtung (100), umfassend:
ein Bürstenkopfelement (104) mit einem Satz von Borsten (116) an einem distalen Ende davon;
einen mit dem Bürstenkopfelement verbundenen Körperabschnitt (102); und
eine innerhalb des Körperabschnitts angeordnete Antriebsstranganordnung (122), umfassend:
eine Betätigungsvorrichtung (840), die ausgebildet ist, um eine periodische lineare Bewegung zu erzeugen; und
eine Antriebsstrangwelle (124, 824), die dazu ausgebildet ist, die erzeugte periodische lineare Bewegung auf das Bürstenkopfelement derart zu übertragen, dass sich der Satz von Borsten in einer ersten Richtung (RD2) bewegt, die parallel zu einer z-Achse der elektrischen Zahnbürstenvorrichtung verläuft, wobei die z-Achse senkrecht zu einer Mittelachse der elektrischen Zahnbürstenvorrichtung und parallel zu den Achsen des Satzes von Borsten steht;
wobei der Satz von Borsten ausgebildet ist, um sich bei einer Amplitude von gleich oder mehr als 0,25 mm ist und einer Frequenz von gleich oder mehr als 0,25 Hz ist, in der ersten Richtung zu bewegen.

2. Elektrische Zahnbürstenvorrichtung nach Anspruch 1, wobei der Satz von Borsten ausgebildet ist, um sich bei einer Amplitude von mehr als 0,5 mm und weniger als 3 mm in der ersten Richtung zu bewegen.

3. Elektrische Zahnbürstenvorrichtung nach Anspruch 1, wobei der Satz von Borsten ausgebildet ist, um sich bei einer Frequenz von weniger als 520 Hz in der ersten Richtung zu bewegen.

4. Elektrische Zahnbürstenvorrichtung nach Anspruch 1, wobei die Antriebsstrangwelle weiter ausgebildet ist, um den Satz von Borsten periodisch in einer zweiten Richtung (SM) zu drehen, die sich von der ersten Richtung unterscheidet, wobei die zweite Richtung etwa um die Mittelachse der elektrischen Zahnbürstenvorrichtung verläuft.

5. Elektrische Zahnbürstenvorrichtung nach Anspruch 4, wobei der Satz von Borsten ausgebildet ist, um sich in der ersten Richtung mit einer ersten Frequenz zu bewegen, und der Satz von Borsten dazu ausgebildet ist, sich in der zweiten Richtung mit einer zweiten Frequenz zu bewegen, die mit der ersten Frequenz übereinstimmt.

6. Elektrische Zahnbürstenvorrichtung nach Anspruch 4, wobei die Antriebsstrangwelle weiter dazu ausgebildet ist, um die periodische lineare Bewegung phasengleich mit der Drehbewegung auszuführen.

7. Elektrische Zahnbürstenvorrichtung nach Anspruch 1, wobei die Betätigungsvorrichtung der Antriebsstranganordnung einen Magneten (830) und Leiter (840C und 840D) umfasst, um die periodische lineare Bewegung zu erzeugen.

8. Elektrische Zahnbürstenvorrichtung nach Anspruch 4, wobei die Betätigungsvorrichtung der Antriebsstranganordnung einen Magneten (830) und Leiter (840A und 840B) umfasst, um die periodische Drehbewegung zu erzeugen.

9. Elektrische Zahnbürstenvorrichtung nach Anspruch 4, wobei der Satz von Borsten ausgebildet ist, um sich bei einer Amplitude von gleich oder mehr als 0,50 mm und einer Frequenz von gleich oder mehr als 40 Hz in der zweiten Richtung zu bewegen.

10. Elektrische Zahnbürstenvorrichtung nach Anspruch 4, wobei der Satz von Borsten ausgebildet ist, um sich bei einer Amplitude von mehr als 0,5 mm und weniger als 6 mm in der zweiten Richtung zu bewegen.

11. Elektrische Zahnbürstenvorrichtung nach Anspruch 4, wobei der Satz von Borsten ausgebildet ist, um sich bei einer Frequenz von weniger als 500 Hz in der zweiten Richtung zu bewegen.

12. Elektrische Zahnbürstenvorrichtung nach Anspruch 1, wobei die Antriebsstranganordnung weiter ein elastisches Element (820) und einen Drehpunkt (850) innerhalb des elastischen Elements umfasst, wobei der Drehpunkt ausgebildet ist, um die erzeugte periodische lineare Bewegung umzukehren.

13. Elektrische Zahnbürstenvorrichtung nach Anspruch 1, wobei die Antriebsstrangwelle ausgebildet ist, um entlang der Z-Achse der elektrischen Zahnbürstenvorrichtung verschoben zu werden, um die periodische lineare Bewegung zu erzeugen.

14. Elektrische Zahnbürstenvorrichtung nach Anspruch 4, wobei die Betätigungsvorrichtung ausgebildet ist, um die periodische Drehung in der zweiten Richtung zu erzeugen.

15. Elektrische Zahnbürstenvorrichtung nach Anspruch 8, wobei die Antriebsstranganordnung weiter ein elastisches Element (820) und einen Drehpunkt (850) innerhalb des elastischen Elements umfasst, wobei der Drehpunkt ausgebildet ist, um die erzeugte periodische Drehbewegung umzukehren.

## Revendications

1. Dispositif de brosse à dents électrique (100), comprenant :
un élément de tête de brosse (104) présentant un ensemble de poils (116) à une extrémité distale de celui-ci ;
une partie de corps (102) couplée à l'élément de tête de brosse ; et
un ensemble de transmission (122) disposé à l'intérieur de la partie de corps, l'ensemble de transmission comprenant :
un actionneur (840) configuré pour générer un mouvement linéaire périodique ; et
un arbre de transmission (124, 824) configuré pour transmettre le mouvement linéaire périodique généré à l'élément de tête de brosse, de manière telle que l'ensemble de poils se meuvent dans une première direction (RD2) qui est parallèle à un axe z du dispositif de brosse à dents électrique, dans lequel l'axe z est perpendiculaire à un axe central du dispositif de brosse à dents électrique et parallèle aux axes de l'ensemble de poils ;
dans lequel l'ensemble de poils sont configurés pour se mouvoir à une amplitude égale ou supérieure à 0,25 mm et à une fréquence égale ou supérieure à 0,25 Hz dans la première direction.

2. Dispositif de brosse à dents électrique selon la revendication 1, dans lequel l'ensemble de poils sont configurés pour se mouvoir à une amplitude supérieure à 0,5 mm et inférieure à 3 mm dans la première direction.

3. Dispositif de brosse à dents électrique selon la revendication 1, dans lequel l'ensemble de poils sont configurés pour se mouvoir à une fréquence inférieure à 520 Hz dans la première direction.

4. Dispositif de brosse à dents électrique selon la revendication 1, dans lequel l'arbre de transmission est en outre configuré pour mettre périodiquement en rotation l'ensemble de poils dans une seconde direction (SM), différente de la première direction, dans lequel la seconde direction est autour de l'axe central du dispositif de brosse à dents électrique.

5. Dispositif de brosse à dents électrique selon la revendication 4, dans lequel l'ensemble de poils est configuré pour se mouvoir dans la première direction à une première fréquence et l'ensemble de poils est configuré pour se mouvoir dans la seconde direction à une seconde fréquence qui est la même que la première fréquence.

6. Dispositif de brosse à dents électrique selon la revendication 4, dans lequel l'arbre de transmission est en outre configuré pour actionner le mouvement linéaire périodique en phase avec le mouvement de rotation.

7. Dispositif de brosse à dents électrique selon la revendication 1, dans lequel l'actionneur de l'ensemble de transmission comprend un aimant (830) et des conducteurs (840C et 840D) pour générer le mouvement linéaire périodique.

8. Dispositif de brosse à dents électrique selon la revendication 4, dans lequel l'actionneur de l'ensemble de transmission comprend un aimant (830) et des conducteurs (840A et 840B) pour générer le mouvement de rotation périodique.

9. Dispositif de brosse à dents électrique selon la revendication 4, dans lequel l'ensemble de poils sont configurés pour se mouvoir à une amplitude égale ou supérieure à 0,50 mm et à une fréquence égale ou supérieure à 40 Hz dans la seconde direction.

10. Dispositif de brosse à dents électrique selon la revendication 4, dans lequel l'ensemble de poils sont configurés pour se mouvoir à une amplitude supérieure à 0,5 mm et inférieure à 6 mm dans la seconde direction.

11. Dispositif de brosse à dents électrique selon la revendication 4, dans lequel l'ensemble de poils sont configurés pour se mouvoir à une fréquence inférieure à 500 Hz dans la seconde direction.

12. Dispositif de brosse à dents électrique selon la revendication 1, dans lequel l'ensemble de transmission comprend en outre un élément résilient (820) et un point de pivotement (850) à l'intérieur de l'élément résilient, dans lequel le point de pivotement est configuré pour inverser le mouvement linéaire périodique généré.

13. Dispositif de brosse à dents électrique selon la revendication 1, dans lequel l'arbre de transmission est configuré pour être déplacé le long de l'axe z du dispositif de brosse à dents électrique pour générer le mouvement linéaire périodique.

14. Dispositif de brosse à dents électrique selon la revendication 4, dans lequel l'actionneur est configuré pour générer la rotation périodique dans la seconde direction.

15. Dispositif de brosse à dents électrique selon la revendication 8, dans lequel l'ensemble de transmission comprend en outre un élément résilient (820) et un point de pivotement (850) à l'intérieur de l'élément résilient, le point de pivotement étant configuré pour inverser le mouvement de rotation périodique généré.
